# EUROPÄISCHE PATENTSCHRIFT

(11) **EP 2 346 726 B1**
(45) Veröffentlichungstag und Bekanntmachung des Hinweises auf die Patenterteilung: **11.03.2015**
(21) Anmeldenummer: 09744146.3
(22) Anmeldetag: 30.10.2009
(51) Int. Cl.: B60T 8/36, F16K 31/06

(54) **ELEKTROMAGNETVENTIL, INSBESONDERE FÜR SCHLUPFGEREGELTE KRAFTFAHRZEUGBREMSANLAGEN**
SOLENOID VALVE, IN PARTICULAR FOR SLIP-REGULATED MOTOR-VEHICLE BRAKE SYSTEMS
VANNE ÉLECTROMAGNÉTIQUE, EN PARTICULIER POUR SYSTÈMES DE FREINAGE POUR VÉHICULES AUTOMOBILES AVEC RÉGULATION DU PATINAGE

(30) Priorität: 12.11.2008 DE 102008056854
(43) Veröffentlichungstag der Anmeldung: 27.07.2011
(73) Patentinhaber: Continental Teves AG & Co. oHG, 60488 Frankfurt (DE)
(72) Erfinder: VOSS, Christoph, 60435 Frankfurt (DE); SCHULZ, Christian, 64560 Riedstadt (DE)
(86) Internationale Anmeldenummer: PCT/EP2009/064338
(87) Internationale Veröffentlichungsnummer: WO 2010/054938

(56) Entgegenhaltungen:
- WO-A-02/35125
- WO-A-99/44872
- WO-A-2008/110436
- DE-A1- 19 739 886
- DE-A1-102007 001 645
- DE-C1- 19 842 334
- JP-A- 2008 106 783

## Beschreibung

Die Erfindung betrifft ein Elektromagnetventil, insbesondere für schlupfgeregelte Kraftfahrzeugbremsanlagen, nach dem Oberbegriff des Patentanspruchs 1.

Aus der DE 197 39 886 A1 ist bereits ein Elektromagnetventil bekannt geworden, dessen Ventilgehäuse zur Befestigung in einer Ventilaufnahmebohrung einen dickwandigen Rohrkörper aufweist, der mit einer dünnwandigen Hülse verbunden ist, wozu die Hülse in eine Öffnung im Rohrkörper eingepresst ist. Diese Maßnahme erfordert die Einhaltung kleiner Fertigungstoleranzen der miteinander zu fügenden Teile, andererseits kann infolge der Pressverbindung nicht ausgeschlossen werden, dass durch die auf dünnwandige Hülse einwirkende Radialkraft eine unerwünschte Verformung und/oder Undichtigkeit infolge einer nachlassenden radialen Reibschlussverbindung zu einer Funktionsbeeinträchtigung führt.

Die WO 2008/110436 A offenbart ein Elektromagnetventil der gattungsbildenden Art, mit einem Ventilgehäuse, bestehend aus einem zur Befestigung in einer Ventilaufnahmebohrung dickwandig ausgebildeten Rohrkörper und einer dünnwandigen Hülse, die über einen Fortsatz am Rohrkörper aufgeschoben ist. An der Hülse ist ein radial umlaufender Bund vorgesehen, der eine Unterseite des Rohrkörpers kontaktiert, wobei sich der Rohrkörper über den Bund zur Verstemmung in der Ventilaufnahmebohrung an einer Bohrungsstufe der Ventilaufnahmebohrung abstützt.

In der DE 10 2007 001 645 A1 wird ein Hydraulikspeicher beschrieben, dessen Speichergehäuse aus einem dickwandigen, blockförmigen ersten Gehäuseabschnitt und einem dünnwandigen, topfförmigen zweiten Gehäuseabschnitt gebildet ist, der einen ringförmigen Bund aufweist, welcher an einer Schulter des blockförmigen ersten Gehäuseabschnitts anliegt. Die Befestigung des innerhalb einer Sackbohrung des ersten Gehäuseabschnitts eingesetzten zweiten Gehäuseabschnitts erfolgt durch eine Verstemmung eines um die Sackbohrung am ersten Gehäuseabschnitt umlaufenden Bördelrands, der mittels eines Bördelwerkzeugs auf den Bund gedrückt wird.

Ferner ist aus der DE 198 42 334 C1 ein Elektromagnetventil bekannt, mit einem Ventilgehäuse, bestehend aus einem zur Befestigung in einer Ventilaufnahmebohrung dickwandig ausgebildeten Rohrkörper und einer dünnwandigen Hülse, die einen Bund aufweist, welcher den Innenabsatz des Rohrkörpers kontaktiert und dort entlang dem Bund verstemmt ist.

Daher ist es die Aufgabe der vorliegenden Erfindung, ein Elektromagnetventil der angegebenen Art mit möglichst einfachen, funktionsgerechten Mitteln kostengünstig und kleinbauend auszuführen und derart zu verbessern, dass beim Zusammenbau des Ventilgehäuses eine präzise koaxiale Ausrichtung der Hülse gegenüber dem Rohrkörper gewährleistet ist.

Diese Aufgabe wird erfindungsgemäß für das Elektromagnetventil der angegebenen Art durch die kennzeichnenden Merkmale des Patentanspruchs 1 gelöst. Ferner wird zur Lösung der gestellten Aufgabe ein besonders vorteilhaftes Verfahren zum Verbinden einer dünnwandigen Hülse mit einem dickwandigen Rohrkörper vorgeschlagen.

Weitere Merkmale und Vorteile der Erfindung gehen im nachfolgenden aus der Beschreibung zweier Ausführungsbeispiele hervor.

Es zeigen:
- Figur 1: ein Elektromagnetventil im Längsschnitt, mit der erfindungsgemäßen Verbindung einer dünnwandigen Hülse mit einem dickwandigen Rohrkörper zur Herstellung eines mehrteiligen Ventilgehäuses,
- Figur 2: im Längsschnitt die Hülse und der Rohrkörper während des Fügeprozesses.

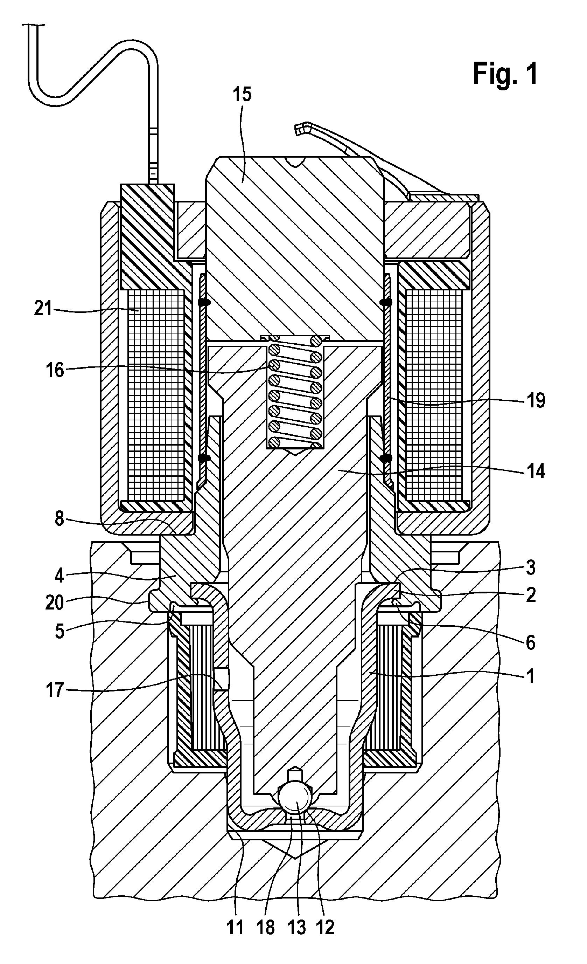

Die Figur 1 zeigt ein Elektromagnetventil, das bevorzugt für schlupfgeregelte Kraftfahrzeug-Bremsanlagen verwendet wird. Das Elektromagnetventil besteht aus an sich bekannten Funktionselementen. Dazu gehört ein in einem Ventilgehäuse angeordnetes Ventilschließglied 13, das einen Ventildurchlass 18 zu öffnen oder zu verschließen vermag, mit einem Magnetanker 14 zur Betätigung des Ventilschließgliedes 13, das im Bereich eines definierten Arbeitshubs relativ beweglich ausgeführt ist, sowie mit einer auf den Magnetanker 14 einwirkenden Rückstellfeder 16, deren vom Magnetanker 14 abgewandtes Federende sich an einem Magnetkern 15 im Ventilgehäuse abstützt. Ferner befindet sich am Ventilgehäuse eine Magnetspule 21 zur Erregung des Magnetankers 14.

Das Elektromagnetventil ist in der elektromagnetisch nicht erregten Stellung geschlossen, wozu die oberhalb des Magnetankers 14 angeordnete Rückstellfeder 16 das mit dem Magnetanker 14 verbundene Ventilschließglied 13 auf den Ventilsitz 12 drückt, wodurch der Ventildurchlass 18 im Ventilsitz 12 versperrt ist.

In vorliegendem Ausführungsbeispiel ist der Magnetkern 15 als Verschlussstopfen in einen austenitischen Gehäuseabschnitt 19 eingepresst, der als dünnwandiges Hülsenteil mit dem Rohrkörper 4 verschweißt ist. Selbstverständlich sind auch andere Ausgestaltungsformen des oberen Gehäuseabschnitts 19 möglich, die jedoch nicht erfindungswesentlich sind.

Das Ventilgehäuse weist zur sicheren Befestigung in einer Ventilaufnahmebohrung 11 einen dickwandigen, steifen Rohrkörper 4 auf, der mit einer dünnwandigen Hülse 1 verbunden ist, mit der Besonderheit, dass die dünnwandige Hülse 1 einen radial umlaufenden Bund 2 aufweist, der einen Innenabsatz 3 im Rohrkörper 4 axial kontaktiert, mit der weiteren, erfindungswesentlichen Besonderheit, dass der Rohrkörper 4 in einem radialen Abstand zum Innenabsatz 3 eine Ausnehmung 5 aufweist, wobei der radiale Abstand derart gewählt ist, dass zwischen dem Innenabsatz 3 und der Ausnehmung 5 am Rohrkörper 4 ein plastisch verformbarer Stehkragen 6 vorhanden ist, der nach Figur 1 in Richtung auf den Bund 2 mittels eines geeigneten Werkzeugs plastisch verformt ist.

Die Figur 1 zeigt somit den vollständig radial nach innen verformten Stehkragen 6 zur unlösbaren, flüssigkeitsundurchlässigen Verbindung des Rohrkörpers 4 mit der Hülse 1.

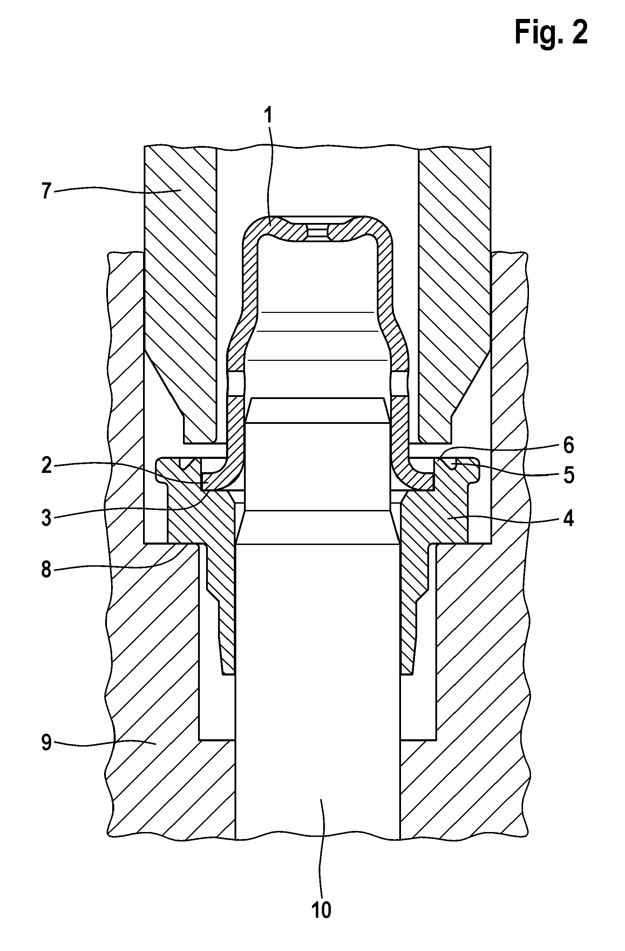

Die Erfindung soll nachfolgend ausführlich anhand der Figur 2 beschrieben werden, wonach zur gezielten Verformung des Stehkragens 6 in Richtung auf den Bund 2 die Ausnehmung 5 vorteilhaft als Ringnut ausgebildet ist, deren Nutweite zur spitz zulaufenden Ausbildung des Stehkragens 6 in Richtung des Nutgrunds stetig abnimmt. Durch diese Gestaltung wird erreicht, dass als Werkzeug ein einfacher Flachstempel 7 verwendet werden kann, der lediglich von oben auf den Stehkragen 6 axial aufgesetzt und niedergedrückt wird. Der Stehkragen 6 hat somit vor der Verformung eine kegelförmige Kontur, die an der Ringfläche des Rohrkörpers 4 durch den Planeinstich einer geeigneten Werkzeugschneide begrenzt ist, die zur präzisen Herstellung der Ausnehmung 5 in der oben erwähnten Form zum Einsatz gelangt.

Ferner geht aus Figur 2 hervor, dass der Rohrkörper 4 auf der vom Stehkragen 6 abgewandten Stirnseite einen Außenabsatz 8 aufweist, an dem ein Gegenhalter 9 zur Abstützung einer während der plastischen Verformung des Stehkragens 6 auftretenden Axialkraft angesetzt ist. Der Gegenhalter 9 erstreckt sich in vorliegendem Ausführungsbeispiel parallel zur Hülse 1 über den Rohrkörper 4 hinaus, um entlang seiner Innenwand den Flachstempel 7 in Richtung auf den Stehkragen 6 zu führen. Zur Zentrierung der Hülse 1 im Rohrkörper 4 ist zwischen dem Bund 2 und dem Innenabsatz 3 ein geringfügiges Radialspiel vorsehen, damit zu Beginn der plastischen Verformung des Stehkragens 6 in Richtung auf den Bund 2 sich die Hülse 1 selbstzentrierend gegenüber dem Rohrkörper 4 am Innenabsatz 3 ausrichten kann. Durch die hiermit vorgestellte Konstruktion ergibt sich mit der plastischen Verformung des Stehkragens 6 auf den Bund 2 eine undurchlässige, reibschlüssige Verbindung zwischen der Hülse 1 und dem Rohrkörper 4, bei der gleichzeitig infolge des Radialspiels eine verblüffend einfache Selbstzentrierung der Hülse 1 gegenüber dem Rohrkörper 4 zustande kommt. Die damit einfach und präzise hergestellte koaxiale Ausrichtung des im Wesentlichen aus der Hülse 1 und dem Rohrkörper 4 bestehenden Ventilgehäuses, trägt gleichzeitig zu einer präzisen Ausrichtung des Ventilsitzes 12 gegenüber dem Ventilschließglied 13 bei, worauf nachfolgend eingegangen wird.

Die Hülse 1 weist nämlich bevorzugt durch Tiefziehen von Dünnblech die Kontur eines Gehäusetopfs auf, dessen Topfboden als Ventilsitz 12 mit dem Ventildurchlass 18 ausgebildet ist, der sich zur einwandfreien und verschleißfreien Ventilfunktion immer möglichst präzise in der Flucht des Ventilschließgliedes 13 befinden soll, das eben als festes Bestandteil des Magnetankers 14 über eine möglichst präzise Führung des Magnetankers 14 innerhalb des Ventilgehäuses koaxial zum Ventilsitz 12 ausgerichtet wird. Gleichzeitig übernimmt der radial nach außen gekröpfte Rand des Gehäusetopfs die Funktion des Bunds 2, der gleichfalls durch Tiefziehen hergestellt ist.

Die Hülse 1 besteht aus einem gehärteten, ferritischen Werkstoff, um den im Tiefziehverfahren hergestellten Ventilsitz 12 möglichst verschleißfrei ausführen zu können. Der im Ventilsitz 12 angeordnete Ventildurchlass 18 als auch der in der Wand der Hülse 1 angeordnete Durchlass 17 lässt sich kostengünstig im Stanz- bzw. Prägeverfahren herstellen.

Hingegen ist die Kontur des Rohrkörpers 4 durch Kaltschlagen oder Kaltfließpressen aus einem Stahlrohling hergestellt, der ebenso wie die Hülse 1 zur Magnetkreisoptimierung ein ferritisches Werkstoffgefüge aufweist. Der Rohrkörper 4 weist überdies einen Haltekragen 20 auf, der sich auf Höhe des Stehkragens 6 entlang dem Außenumfang des Rohrkörpers 4 erstreckt, sodass mittels einer Außenverstemmung des Gehäusematerials im Bereich der Ventilaufnahmebohrung 11 eine feste und dichte Verbindung zwischen dem Rohrkörper 4 und der Ventilaufnahmebohrung 11 zustande kommt. Weiterhin sind über das Kaltschlagen oder Kaltfließpressen des Stahlrohlings hinaus der Innenabsatz 3, die Ausnehmung 5 sowie der Stehkragen 6 durch spanabhebende Werkstückbearbeitung präzise am Rohrkörper 4 hergestellt.

Die Herstellung des mehrteiligen Ventilgehäuses basiert auf einem Verfahren zum Verbinden eines dickwandigen Rohrkörpers 4 mit einer dünnwandigen Hülse 1 nach folgenden Schritten:
- Abstützen des Rohrkörpers 4 im Bereich seines Außenabsatzes 8 an einem Gegenhalter 9,
- Einschieben eines passgenauen Montagedorns 10 in den Rohrkörper 4 bis zu einem Überstand des Montagedorns 10 an einem am Rohrkörper 4 angeordneten Stehkragen 6,
- Aufsetzen der Hülse 3 auf den Überstand des Montagedorns 10 und Einschieben der Hülse 3 in den Rohrkörper 4 bis ein Bund 2 an der Hülse 3 einen Innenabsatz 3 im Rohrkörper 4 axial kontaktiert,
- Herausziehen des Montagedorns 10 aus dem Rohrkörper 4, und plastisches Verformen des Stehkragens 6 in Richtung auf den Bund 2 durch axiales Niederdrücken des Stehkragens 6 mittels eines Flachstempels 7.

Wie aus vorangegangener Beschreibung des Elektromagnetventils deutlich geworden ist, kommen für das Ventilgehäuse überwiegend ferritische Bauelemente zur Anwendung, womit durch den nahezu vollständigen Verzicht auf austenitische Bauelemente der Wirkungsgrad des Magnetkreises erheblich gesteigert wird. Dies hat unerwünschter Weise bisher dazu geführt, dass ohne geeignete Vorkehrungen das sogenannte Kleben des Magntankers 14 am Magnetkern 15 nach Beendigung der elektromagnetischen Erregung verstärkt auftreten konnte, weshalb die Rückstellfeder 16 nunmehr derart ausgelegt ist, dass deren Federkraft bereits im stromlos geschlossenen Zustand des Ventils gegenüber bisherigen Auslegungen leicht erhöht ist als auch im elektromagnetisch geöffneten Ventilzustand derart erhöht ist, dass nach Abschluss der elektromagnetischen Erregung zum verzögerungsfreien Schließen des Ventils der Magnetanker 14 infolge der verstärkten Wirkung der Rückstellfeder 16 unverzüglich vom Magnetkern 15 abgeworfen werden kann. Die damit etwas steifere Auslegung der Rückstellfeder 15 stellt eine einfache, kostengünstigere Maßnahme dar, anstelle der zusätzlichen Verwendung einer "Antiklebscheibe" zwischen Magnetanker 14 und Magnetkern 15.

### Bezugszeichenliste

- 1: Hülse
- 2: Bund
- 3: Innenabsatz
- 4: Rohrkörper
- 5: Ausnehmung
- 6: Stehkragen
- 7: Flachstempel
- 8: Außenabsatz
- 9: Gegenhalter
- 10: Montagedorn
- 11: Ventilaufnahmebohrung
- 12: Ventilsitz
- 13: Ventilschließglied
- 14: Magnetanker
- 15: Magnetkern
- 16: Rückstellfeder
- 17: Durchlass
- 18: Ventildurchlass
- 19: Gehäuseabschnitt
- 20: Haltekragen

## Patentansprüche

1. Elektromagnetventil, insbesondere für schlupfgeregelte Kraftfahrzeug-Bremsanlagen, mit einem in einem Ventilgehäuse angeordneten Ventilschließglied (13), das einen Ventildurchlass (18) zu öffnen oder zu verschließen vermag, mit einem Magnetanker (14) zur Betätigung des Ventilschließgliedes (13), der im Bereich eines definierten Arbeitshubs relativ beweglich ausgeführt ist, mit einer auf den Magnetanker (14) einwirkenden Rückstellfeder (16), deren vom Magnetanker (14) abgewandtes Federende sich an einem Magnetkern (15) im Ventilgehäuse abstützt, wobei das Ventilgehäuse zur Befestigung in einer Ventilaufnahmebohrung (11) einen dickwandigen Rohrkörper (4) aufweist, der mit einer dünnwandigen, den Ventildurchlass (18) aufweisenden Hülse (1) verbunden ist, welche einen radial umlaufenden Bund (2) aufweist, **dadurch gekennzeichnet, dass** der Bund (2) einen Innenabsatz (3) im Rohrkörper (4) kontaktiert, wobei zur Zentrierung der Hülse (1) im Rohrkörper (4) zwischen dem Bund (2) und dem Innenabsatz (3) ein geringfügiges Radialspiel vorgesehen ist, und dass der Rohrkörper (4) in einem radialen Abstand zum Innenabsatz (3) eine Ausnehmung (5) aufweist, wobei der radiale Abstand derart gewählt ist, dass zwischen dem Innenabsatz (3) und der Ausnehmung (5) am Rohrkörper (4) ein plastisch verformter Stehkragen (6) zur Verbindung des Rohrkörpers (4) mit der Hülse (1) verbleibt.

2. Elektromagnetventil nach Anspruch 1, **dadurch gekennzeichnet, dass** die Ausnehmung (5) als Ringnut ausgebildet ist, deren Nutweite zur spitz zulaufenden Ausbildung des Stehkragens (6) in Richtung des Nutgrunds stetig abnimmt.

3. Elektromagnetventil nach Anspruch 1 oder 2, **dadurch gekennzeichnet, dass** der Stehkragen (6) in Richtung auf den Bund (2) mittels eines geeigneten Werkzeugs (7, 9) plastisch verformt ist.

4. Elektromagnetventil nach Anspruch 3, **dadurch gekennzeichnet, dass** der Rohrkörper (4) auf der vom Stehkragen (6) abgewandten Stirnseite einen Außenabsatz (8) aufweist, an dem ein Gegenhalter (9) zur Abstützung einer während der plastischen Verformung des Stehkragens (6) auftretenden Axialkraft angelegt ist.

5. Elektromagnetventil nach Anspruch 1, **dadurch gekennzeichnet, dass** durch die plastische Verformung des Stehkragens (6) in Richtung auf den Bund (2) die Hülse (1) selbstzentrierend gegenüber dem Rohrkörper (4) am Innenabsatz (3) ausgerichtet ist.

6. Elektromagnetventil nach Anspruch 3, **dadurch gekennzeichnet, dass** infolge der plastischen Verformung des Stehkragens (6) auf den Bund (2) eine undurchlässige, formschlüssige Verbindung zwischen der Hülse (1) und dem Rohrkörper (4) hergestellt ist.

7. Elektromagnetventil nach einem der vorangegangenen Ansprüche, **dadurch gekennzeichnet, dass** die Hülse (1) aus einem ferritischen, vorzugsweise gehärteten Werkstoff besteht.

8. Elektromagnetventil nach Anspruch 1, **dadurch gekennzeichnet, dass** die mit dem Ventildurchlass (18) versehene Hülse (1) durch Tiefziehen von Dünnblech die Kontur eines Gehäusetopfs aufweist, dessen Topfboden als Ventilsitz (12) ausgebildet ist.

9. Elektromagnetventil nach Anspruch 1, **dadurch gekennzeichnet, dass** die Kontur des Rohrkörpers (4) durch Kaltschlagen oder Kaltfließpressen aus einem Stahlrohling hergestellt ist, der ein ferritisches Werkstoffgefüge aufweist, und dass der Innenabsatz (3), die Ausnehmung (5) sowie der Stehkragen (6) durch spanabhebende Werkstückbearbeitung, hergestellt ist.

10. Verfahren zum Verbinden eines aus einem dickwandigen Rohrkörper (4) und einer einen Ventildurchlaß (18) aufweisenden dünnwandigen Hülse (1) bestehenden Ventilgehäuses, insbesondere für das Elektromagnetventil nach einem der Ansprüche 1-9, **gekennzeichnet durch** folgende Schritte:
- Abstützen des Rohrkörpers (4) im Bereich seines Außenabsatzes (8) an einem Gegenhalter (9),
- Einschieben eines Montagedorns (10) in den Rohrkörper (4) bis zu einem Überstand des Montagedorns (10) an einem am Rohrkörper (4) angeordneten Stehkragen (6),
- Aufsetzen der Hülse (1) auf den Überstand des Montagedorns (10) und Einschieben der Hülse (1) in den Rohrkörper (4) bis ein Bund (2) an der Hülse (1) einen Innenabsatz (3) im Rohrkörper (4) axial kontaktiert,
- Herausziehen des Montagedorns (10) aus dem Rohrkörper (4),
- plastisches Verformen des Stehkragens (6) in Richtung auf den Bund (2) **durch** axiales Niederdrücken des Stehkragens (6).

11. Verfahren nach Anspruch 10,
**dadurch gekennzeichnet, dass**
der Stehkragen (6) mittels eines Flachstempels (7) axial niedergedrückt wird.

12. Verfahren nach Anspruch 10,
**dadurch gekennzeichnet, dass**
sich die Hülse (1) zu Beginn der plastischen Verformung des Stehkragens (6) selbstzentrierend im Rohrkörper (4) ausrichtet.

## Claims

1. Solenoid valve, in particular for motor vehicle brake systems with traction control, having a valve closing member (13), which is arranged in a valve housing and which is capable of opening or closing a valve passage (18), having a magnet armature (14) for actuating the valve closing member (13), which is designed for relative movement in the range of a defined working stroke, and having a return spring (16), which acts on the magnet armature (14) and the spring end of which remote from the magnet armature (14) is supported on a magnetic core (15) in the valve housing, the valve housing, for fixing in a valve seating bore (11), comprising a thick-walled tubular body (4), which is connected to a thin-walled sleeve (1) which comprises the valve passage (18) and which comprises a radially circumferential flange (2), **characterized in that** the flange (2) is in contact with an internal step (3) in the tubular body (4), a slight radial play being provided between the flange (2) and the internal step (3) for centering the sleeve (1) in the tubular body (4), and **in that** the tubular body (4) comprises a recess (5) at a radial interval from the internal step (3), the radial interval being selected in such a way that a plastically deformable stay collar (6) remains between the internal step (3) and the recess (5) on the tubular body (4) for connecting the tubular body (4) to the sleeve (1).

2. Solenoid valve according to Claim 1, **characterized in that** the recess (5) is embodied as an annular groove, the groove width of which diminishes constantly in the direction of the groove base for the acutely tapering formation of the stay collar (6).

3. Solenoid valve according to Claim 1 or 2, **characterized in that** the stay collar (6) is plastically deformed towards the flange (2) by means of a suitable tool (7, 9).

4. Solenoid valve according to Claim 3, **characterized in that** the tubular body (4), on the end face remote from the stay collar (6), comprises an external step (8), to which a steady (9) is applied for bracing an axial force occurring during the plastic deformation of the stay collar (6).

5. Solenoid valve according to Claim 1, **characterized in that** the plastic deformation of the stay collar (6) towards the flange (2) serves to align the sleeve (1) on the internal step (3), self-centering it in relation to the tubular body (4).

6. Solenoid valve according to Claim 3, **characterized in that** due to the plastic deformation of the stay collar (6) towards the flange (2), an impervious, positively interlocking connection is produced between the sleeve (1) and the tubular body (4).

7. Solenoid valve according to one of the preceding claims, **characterized in that** the sleeve (1) is composed of a ferritic, preferably hardened material.

8. Solenoid valve according to Claim 1, **characterized in that** by deep-drawing from thin sheet metal, the sleeve (1) provided with the valve passage (18) has the contour of a housing cup, the cup base of which is formed as valve seat (12).

9. Solenoid valve according to Claim 1, **characterized in that** the contour of the tubular body (4) is produced by cold upsetting or cold extrusion from a steel blank, which has a ferritic material grain structure, and **in that** the internal step (3), the recess (5) and the stay collar (6) are produced by metal-cutting workpiece machining.

10. Method for connecting a valve housing comprising a thick-walled tubular body (4) and a thin-walled sleeve (1) which comprises a valve passage (18), in particular for the solenoid valve according to one of Claims 1-9, **characterized by** the following steps:
- supporting of the tubular body (4) in the area of its external step (8) on a steady (9),
- insertion of an assembly mandrel (10) into the tubular body (4) until the assembly mandrel (10) projects by a length from a stay collar (6) located on the tubular body (4),
- placement of the sleeve (1) on to the projecting length of the assembly mandrel (10) and insertion of the sleeve (1) into the tubular body (4) until a flange (2) on the sleeve (1) comes into axial contact with an internal step (3) in the tubular body (4),
- withdrawal of the assembly mandrel (10) from the tubular body (4)
- plastic deformation of the stay collar (6) towards the flange (2) through axial pressing down of the stay collar (6).

11. Method according to Claim 10, **characterized in that** the stay collar (6) is pressed down axially by a flat punch (7).

12. Method according to Claim 10, **characterized in that** at the start of the plastic deformation of the stay collar (6) the sleeve (1) aligns itself for self-centering in the tubular body (4).

## Revendications

1. Soupape électromagnétique, en particulier pour des systèmes de freinage de véhicules automobiles avec régulation du patinage, comprenant un organe de fermeture de soupape (13) disposé dans un boîtier de soupape, qui permet d'ouvrir ou de fermer un passage de soupape (18), une armature magnétique (14) pour actionner l'organe de fermeture de soupape (13), qui est réalisée de manière à pouvoir se déplacer de manière relative dans la plage d'une course de travail définie, un ressort de rappel (16) agissant sur l'armature magnétique (14), dont l'extrémité de ressort opposée à l'armature magnétique (14) s'appuie contre un noyau magnétique (15) dans le boîtier de soupape, le boîtier de soupape présentant, pour la fixation dans un alésage de réception de soupape (11), un corps tubulaire à paroi épaisse (4) qui est connecté à une douille (1) à paroi mince, présentant le passage de soupape (18), laquelle présente un épaulement (2) radialement périphérique, **caractérisée en ce que** l'épaulement (2) vient en contact avec un retrait intérieur (3) dans le corps tubulaire (4), un léger jeu radial étant prévu pour le centrage de la douille (1) dans le corps tubulaire (4) entre l'épaulement (2) et le retrait intérieur (3), et **en ce que** le corps tubulaire (4) présente, à distance radiale du retrait intérieur (3), un évidement (5), la distance radiale étant choisie de telle sorte qu'entre le retrait intérieur (3) et l'évidement (5) au niveau du corps tubulaire (4) subsiste un rebord saillant déformé plastiquement (6) pour la connexion du corps tubulaire (4) à la douille (1).

2. Soupape électromagnétique selon la revendication 1, **caractérisée en ce que** l'évidement (5) est réalisé sous forme de rainure annulaire dont la largeur de rainure diminue constamment dans la direction de la base de rainure jusqu'à la réalisation du rebord saillant (6) se terminant en pointe.

3. Soupape électromagnétique selon la revendication 1 ou 2, **caractérisée en ce que** le rebord saillant (6) est déformé plastiquement dans la direction de l'épaulement (2) au moyen d'un outil approprié (7, 9).

4. Soupape électromagnétique selon la revendication 3, **caractérisée en ce que** le corps tubulaire (4) présente du côté frontal opposé au rebord saillant (6) un retrait extérieur (8) au niveau duquel s'applique un dispositif de retenue conjugué (9) pour supporter une force axiale se produisant pendant la déformation plastique du rebord saillant (6).

5. Soupape électromagnétique selon la revendication 1, **caractérisée en ce que** la douille (1), sous l'effet de la déformation plastique du rebord saillant (6) dans la direction de l'épaulement (2), est orientée de manière autocentrée par rapport au corps tubulaire (4) au niveau du retrait intérieur (3).

6. Soupape électromagnétique selon la revendication 3, **caractérisée en ce que**, du fait de la déformation plastique du rebord saillant (6) sur l'épaulement (2), une connexion hermétique, par engagement par correspondance de formes, est réalisée entre la douille (1) et le corps tubulaire (4).

7. Soupape électromagnétique selon l'une quelconque des revendications précédentes, **caractérisée en ce que** la douille (1) se compose d'un matériau ferritique, de préférence trempé.

8. Soupape électromagnétique selon la revendication 1, **caractérisée en ce que** la douille (1) pourvue du passage de soupape (18) présente, par emboutissage profond de tôle mince, le contour d'un pot de boîtier, dont le fond de pot est réalisé sous forme de siège de soupape (12).

9. Soupape électromagnétique selon la revendication 1, **caractérisée en ce que** le contour du corps tubulaire (4) est fabriqué par frappe à froid ou par extrusion à froid à partir d'une pièce brute en acier, qui présente une structure de matériau ferritique, et **en ce que** le retrait intérieur (3), l'évidement (5) ainsi que le rebord saillant (6) sont fabriqués par usinage de pièce par enlèvement de copeaux.

10. Procédé pour connecter un boîtier de soupape constitué d'un corps tubulaire à paroi épaisse (4) et d'une douille (1) à paroi mince présentant un passage de soupape (18), en particulier pour la soupape électromagnétique selon l'une quelconque des revendications 1 à 9, **caractérisé par** les étapes suivantes :
- support du corps tubulaire (4) dans la région de son retrait extérieur (8) contre un dispositif de support conjugué (9),
- insertion d'un mandrin de montage (10) dans le corps tubulaire (4) jusqu'à un dépassement du mandrin de montage (10) au niveau d'un rebord saillant (6) disposé au niveau du corps tubulaire (4),
- pose de la douille (1) sur le dépassement du mandrin de montage (10) et insertion de la douille (1) dans le corps tubulaire (4) jusqu'à ce qu'un épaulement (2) vienne en contact axial au niveau de la douille (1) avec un retrait intérieur (3) dans le corps tubulaire (4),
- enlèvement du mandrin de montage (10) du corps tubulaire (4),
- déformation plastique du rebord saillant (6) dans la direction de l'épaulement (2) par enfoncement axial du rebord saillant (6).

11. Procédé selon la revendication 10, **caractérisé en ce que** le rebord saillant (6) est enfoncé axialement au moyen d'un poinçon plat (7).

12. Procédé selon la revendication 10, **caractérisé en ce que** la douille (1), au début de la déformation plastique du rebord saillant (6), s'oriente de manière autocentrée dans le corps tubulaire (4).
